# EUROPEAN PATENT SPECIFICATION

(11) **EP 2 464 245 B1**
(45) Date of publication and mention of the grant of the patent: **31.10.2018**
(21) Application number: 10742994.6
(22) Date of filing: 10.08.2010
(51) Int. Cl.: A23L 29/30, A23L 33/26, A23L 5/00, A23L 7/00, A23L 7/126, A23P 10/20

(54) **LOW WATER ACTIVITY FOOD BINDER AND METHODS RELATED THERETO**
LEBENSMITTELBINDER MIT GERINGER WASSERAKTIVITÄT UND ZUGEHÖRIGE VERFAHREN
LIANT ALIMENTAIRE À FAIBLE ACTIVITÉ À L'EAU ET PROCÉDÉS ASSOCIÉS À CELUI-CI

(30) Priority: 13.08.2009 US 233513 P
(43) Date of publication of application: 20.06.2012
(73) Proprietor: Kellogg Company, Battle Creek, MI 49016-3599 (US)
(72) Inventor: GARTER, Barbara, Shelbyville MI 49344 (US)
(74) Representative: Monzón de la Flor, Luis Miguel
(86) International application number: PCT/US2010/044972
(87) International publication number: WO 2011/019690

(56) References cited:
- EP-A1- 1 774 856
- WO-A1-2009/009720
- US-A1- 2005 181 019
- US-A1- 2005 226 960
- US-A1- 2007 065 557
- US-A1- 2008 193 606

## Description

### FIELD OF THE INVENTION

This invention relates generally to food binders, more particularly to food binders for granola bars and ready-to-eat cereal clusters.

### BACKGROUND OF THE INVENTION

Food binders, such as those useful to bind particulates so as to form a granola bar, or those useful to bind particulates to form a ready-to-eat (RTE) cereal cluster, are often based on a sugar syrup, making water activity control relatively easy. The water activity of the food binder syrups used to form granola bars preferably have a water activity of less than 0.55. Sucrose, corn syrup, dextrose, and other sugars are often combined with water to provide a binder syrup having a desirable taste and mouthfeel. The sucrose, corn syrup, dextrose, and other sugars are known to bind free water so that the water in the syrup does not migrate to the particulates. In the case of rice bubbles and other crisp particulates in an agglomerated product, moisture migration from the syrup to the particulates is unacceptable in that the particulate may become soggy, stale, and easily compacted.

In addition to a desirable taste and mouthfeel, consumers are increasingly demanding foods with fiber enrichment. However, the sensory experience of fiber- enriched foods is expected to match or exceed that of the food to which it is compared. The scientific challenge of meeting the fiber-enrichment demand is compounded when trying to alter other critical food processing parameters, such as water activity.

it is known in the state of art the document US2005181019 which discloses a nutrition bar comprising about 10% wt or more of soy and/or rice protein, at least one transition metal or transition metal compound, and about 2% wt or more of a humectant, and wherein the at least one transition metal or transition metal compound is in a substantially water insoluble form at 20° C

### SUMMARY OF THE INVENTION

One aspect of the invention provides a binder syrup comprising polydextrose in an amount of at least 30% by weight, crystalline fructose in an amount of at least 1 % by weight, and glycerin in an amount of at least 1 % by weight, based on the total weight of the binder syrup. The binder syrup has a water activity of less than 0.55 and a total combined amount of glucose and sucrose of less than 1% by weight based on the total weight of the binder syrup.

Another aspect of the invention provides a food product comprising a plurality of particulates and a binder syrup disposed on the particulates. The binder syrup of the food product includes polydextrose in an amount of at least 30% by weight, crystalline fructose in an amount of at least 1% by weight, and glycerin in an amount of at least 1% by weight, based on the total weight of the binder syrup. The binder syrup of the food product has a water activity of less than 0.55 and a total combined amount of glucose and sucrose of less than 1% by weight based on the total weight of the binder syrup.

Another aspect of the invention provides a method of forming a binder syrup comprising the steps of combining polydextrose in an amount of at least 30% by weight, crystalline fructose in an amount of at least 1% by weight, and glycerin in an amount of at least 1% by weight, and wherein the total combined amount of glucose and sucrose in said binder is less than 1% by weight based on the total weight of the binder syrup.

The invention improves on other binder syrups in the ability to deliver fiber while maintaining a low calorie content, low water activity, and desirable taste and mouthfeel. The binder syrup remains flexible and the particulates remain crisp for at least one year under normal transport, commercial packaging, and shelf life conditions of 10 ºC (50° F) to 29,44 ºC (85° F). The binder syrup can also be used as a drizzle, topping, or coating.

### DETAILED DESCRIPTION

The present invention is directed toward food binders that comprise polydextrose and crystalline fructose, and have a water activity of less than 0.55, and methods for making such binders. Foods products made using the binders are also provided.

The binders are useful for binding particulates, so as to form food products, such as granola bars and RTE cereal products. Due to the low water activity of the binder syrup, agglomerated food products including the binder syrup are stable, meaning that the binder syrup remains flexible and the particulates remain crisp for at least one year under normal shelf life, commercial packaging, and transport conditions of 10° C (50° F)-29,44° C (85 ° F). A sensory descriptive analysis of example food products shows no change in pliability, hardness of incisor or molar bite, or initial crispness of particulates over a normal shelf life. The binder syrup includes soluble fiber in an amount of at least 30% by weight fiber, based on the total weight of the binder syrup.

Polydextrose Ingredient. Polydextrose is a polysaccharide which is synthesized by random polymerization of glucose, sorbitol and a suitable acid catalyst at a high temperature and under partial vacuum. Polydextrose is classified as a fiber by the United States Food and Drug Administration. The polydextrose of the binder syrup provides a significant amount of fiber to the binder syrup. Preferably, the polydextrose includes soluble fiber in an amount of 80% by weight, and most preferably 90% by weight, based on the total weight of the polydextrose. In other words, 100 grams of polydextrose includes at least 80 grams of fiber. Various versions of polydextrose are available, the versions depending on the ratios of glucose and sorbitol used during polymerization. Any polydextrose polymers are acceptable for use in the present invention, although powdered polydextrose is preferred. One supplier is Danisco (Wisconsin, U.S.). The binder syrup of the present invention includes at least 30% by weight polydextrose. Preferably, the binder syrup includes 45% to 80% by weight polydextrose. More preferably, the binder syrup includes 50% to 60% by weight polydextrose. Most preferably, the binder syrup comprises 55% to 60% by weight polydextrose, based on the total weight of the binder syrup.

Crystalline Fructose Ingredient. "Crystalline fructose" is derived from corn, and is available in crystalline and powdered form. Either form is useful in the present invention, although the crystalline form is preferred. Crystalline fructose may be obtained from many manufactures, such as Tate & Lyle (London, UK). The binder syrup includes the crystalline fructose in an amount of 1% to 25% by weight, more preferably 10% to 18% by weight, most preferably 13% to 15% by weight, based on the total weight of the binder syrup.

Glycerin Ingredient. Glycerin is a sweet-tasting sugar alcohol. Food-grade glycerol is preferred for use in the present invention, and can be obtained from many sources. The binder syrup includes the glycerin in an amount of 1% to 15% by weight, more preferably 5% to 10% by weight, most preferably 6% to 8% by weight, based on the total weight of the binder syrup.

Optional Ingredients. In order to provide bulk, flavor, or color, optional ingredients may be employed in the binder. The following ingredients are preferred optional ingredients:

A. Water. The binder syrup may include water in an amount of 1% to 20% by weight, more preferably 5% to 15% by weight, and most preferably 11% to 13% by weight, based on the total weight of the binder syrup.

B. Fat. The binder syrup may include at least one fat, preferably a vegetable fat. The fat can be a liquid or a solid at room temperature. Any food grade fat or oil is useful. The binder syrup may include the fat in an amount of 0.25% to 10% by weight, more preferably 2% to 6% by weight, and most preferably 2% to 4% by weight, based on the total weight of the binder syrup.

C. Lecithin. The binder syrup may include lecithin in an amount of 0.001% to 2% by weight, more preferably 0.05% to 0.5% by weight, and most preferably 0.1% to 0.15% by weight, based on total weight of the binder syrup.

D. Artificial Sweetener. The binder syrup may include artificial sweeteners, either a natural or synthetic sugar substitute, such as sucralose. The binder syrup preferably includes a 25% by weight sucralose solution present in an amount of 0.03% to 0.07% by weight, more preferably 0.04% to 0.06% by weight, and most preferably 0.05% by weight, based on the total weight of the binder syrup.

E. Flavorants. The binder syrup may also include salt and flavorants, preferably vanilla, cinnamon, or honey. The flavorants can be any known in the art, including those that contribute a flavor, such as chocolate; vanilla; nut; spice; fruit; meat; cheese; vegetable; herb; or any combination thereof. The binder syrup may include the flavorants in an amount of less than 10% by weight, based on the total weight of the binder syrup.

The binder syrup is preferably "sugar-free", which means the binder syrup does not contain sucrose or dextrose. In other words, the binder syrup preferably includes sugar, such as dextrose (glucose) and sucrose, in an amount of 0% by weight, based on the total weight of the binder syrup.

The percent (%) by weight of each component of the binder syrup is measured by weighing each ingredient as it is added to the binder syrup, determining the amount of water by weight loss of the binder syrup during cooking, and recalculating percentage composition of each ingredient.

Unexpected Results. While not wishing to be bound by any one theory, the present inventors surmise that crystalline fructose and glycerin combine with the polydextrose to create a microstructure, such that any water is trapped or pushed out of the binder matrix, resulting in very little available free water. The present method of making the binder is effective to make a binder with the desired water activity. The polydextrose does not provide water activity control, whereas the crystalline fructose and glycerin do. Since the majority of solids in the binder of the present invention are from polydextrose, it is unexpected that the minimal amounts of crystalline fructose and glycerin would have such an impact on the overall water activity. However, due to this theorized microstructure with the polydextrose, crystalline fructose and glycerin contribute to a water activity-lowering effect, even at low concentrations in the binder. For instance, in the present invention, the polydextrose/crystalline fructose/glycerin weight ratio can be approximately 4 : 1 : 0.5. Ideally, the total solids measurement of the binder syrup is from 80% to 90%, more preferably, from 83% to 86%, most preferably, approximately 84% solids.

The invention improves on other binder syrups in the ability to deliver fiber at a high level while maintaining a low calorie content, and low water activity. In addition to the desirable water activity, calorie content, and fiber content, the binder syrup provides favorable mouthfeel and taste to a consumer.

Water Activity. The binder syrup has a water activity that is less than 0.55. Binder syrups having a water activity less than 0.50 are more preferred, with those having a water activity approximately equal to or less than 0.49 most preferred. Water activity is measured by use of a commercially-available water activity meter.

Fiber Content. The binder syrup of the present invention includes at least 27% by weight fiber, preferably 30-40% by weight fiber, and most preferably 40-50% by weight fiber. The polydextrose provides the fiber of the binder syrup.

Method of Forming. The method of forming the binder syrup includes combining polydextrose in an amount of at least 30% by weight, crystalline fructose in an amount of at least 1% by weight, and glycerin in an amount of at least 1% by weight, based on the total weight of the binder syrup. The method typically includes measuring the polydextrose, crystalline fructose and glycerin, at a weight ratio of 4 : 1 : 0.05. If the polydextrose is non-aqueous, the method includes blending and heating the polydextrose, glycerin, and water, along with optional ingredients, at 76,66 ºC (170ºF) - 112,77 ºC (235°F) to fully dissolve the polydextrose, before combining the crystalline fructose with the aqueous polydextrose blend. These processing temperatures are lower than those typically used for processing binders, hi this regard, an energy and cost savings can be obtained, and cooked flavors can also be avoided.

The method next includes combining crystalline fructose and optional flavors. The method includes heating and blending the polydextrose, glycerin, and crystalline fructose until the binder syrup has a water activity of 0.55 or less. The method then includes cooling the binder syrup to a temperature of 71,11 ºC (160ºF) - 62,77 ºC (145ºF). Other ingredients, such as water, fat, lecithin, artificial sweetener, and flavorant, may be added throughout the process or after the cooling step.

Methods of Use. The binder syrup described above is preferably disposed on a plurality of particulates to form a food product. The particulates typically include at least one of cereal pieces, granola, rice bubbles, whole grains, bran particles, toasted oats, rolled oats, nuts, and fruit pieces. The particulates typically have a water activity of 0.4 to 0.5. The food product typically includes the binder syrup in an amount of 30% to 40% by weight and the particulates in an amount of 60% to 70% by weight, based on the total of the food product. The food product may be a granola bar, RTE cereal, RTE snack piece, ice cream topping, or edible decoration. In addition to the binder syrup and particulates described above, the food product may also include dried vegetables (corn, peas, peppers), nuts, legumes, dried seaweed, and/or bits of jerky, bound with a non-sweetened binder, to create a different flavor profile. Additional fiber can be added to the exterior of the food product via a compound coating, or a dusting of ground nuts or dried fruit.

The binder syrup is typically used to make granola bars using a binder syrup to particulate weight ratio of 1 : 4 to 1 : 1. Most preferably the granola bar includes the binder syrup in an amount 30% to 40% by weight and the particulates in an amount of 60% to 70% by weight, based on the total weight of the granola bar. The particulates of the granola bar typically include rolled oats, grains, fruit pieces, nut pieces, and cinnamon. However, the granola bar can include any combination of these or other desired ingredients. Those in the art can modify this particulate mixture to result in any flavor and particulate profile desired. Bars may be formed by mixing the warm binder syrup with the particulates, spreading the mixture into a slab of the desired thickness, cooling the slab and cutting the slab into granola bars of the desired size. The granola bars have a water activity of less than 0.55 and a soft chewy texture.

As stated above, in addition to granola bars, the binder syrup can be used to make granola cereals, RTE clusters, and other cereal pieces. In those embodiments, the binder syrup and the particulates are also blended, preferably when the binder syrup is warm, and either formed into cereal pieces, or broken from larger pieces to form smaller agglomerates. Those in the art are able to adjust the forming process so as to result in the piece desired.

The following examples are provided for further describing the scope, and for providing especially preferred embodiments. The examples are not intended to be limiting; the invention is defined by the entirety of the specification and claims.

### Examples

Example 1. A binder syrup was prepared having the formula of approximately: 58.5% polydextrose; 14.1% crystalline fructose; 12.2% water; 7.5% glycerin; 3.5% fat (preferably vegetable); 3.3% honey (flavorant); 0.6% salt; 0.1% lecithin; 0.1% flavor (preferably vanilla 2X); 0.05% sucralose 25% solution (sweetener). All percentages are weight percentages based on the total binder weight. The polydextrose of the binder syrup includes soluble fiber in an amount of 80% by weight, based on the total weight of the polydextrose. Thus the binder syrup has a fiber content of 46.8 % by weight, based on the weight of the binder syrup. The binder syrup had a water activity of approximately 0.49.

Example 2. Granola Bar. A granola bar was prepared including 65% by weight particulates and 35% by weight binder syrup. The binder syrup was prepared according to Example 1. The particulates and the binder syrup were combined and mixed, creating a slab out of the combined binder syrup and particulates, and cut into bars being 40 gram in weight. In this granola bar embodiment, the particulates comprised approximately: 34% by weight toasted oats; 8% by weight raisins; 9% by weight rolled oats; 6% by weight toasted almonds; and 8% by weight rice bubbles, based on the total weight of the granola bar. The binder syrup provides 6.552 grams of fiber per 40 gram granola bar. The granola bar provides a total fiber content of 22.5 % by weight, based on the total weight of the granola bar, or 9 grams per 40 gram granola bar.

After cooling, the granola bars were flexible and chewy, with the particulates remaining crisp. The bars were packaged in individual wrappers, boxed and stored under commercial conditions. The granola bars maintained the ideal features, including a water activity of 0.4 to 0.5, for over 2 months. The granola bars also maintained a desirable aroma, flavor, and texture, including pliability, hardness, and crispness, for over four months.

Example 3. RTE Cereal Product. A RTE cereal product was prepared by providing 60% by weight particulates to 40% by weight binder syrup, combining the particulates and the binder syrup, and forming the combined particulates and binder syrup into clusters. The particulates included 20% by weight rice bubbles, 30% by weight crushed cereal flakes, 5% by weight crushed pecans, and 5% by weight dried and chopped cherries, based on the total weight of the granola bar. The resulting agglomerated cluster pieces were tossed with whole flakes, pecans, and dried cherries. The serving size of the RTE cereal product is 20 grams. The binder syrup provides 3.733 grams of fiber per 20 gram serving size of RTE cereal product. The RTE cereal product has a fiber content of 20 % by weight, based on the total weight of the food product, or 4 grams per 20 gram serving size.

The RTE cereal product, including the agglomerated flakes and clusters, were packaged and did not become soggy under normal commercial conditions. The binder syrup provided a stable chewiness to the clusters and did not solidify. A sensory descriptive analysis of the RTE cereal product shows no change in pliability, hardness of incisor or molar bite, or initial crispness of particulates over a shelf life of at least 2 months. In addition, the RTE cereal product maintained the ideal features, including a water activity of 0.4 to 0.5, for over 2 months. The binder syrup remained flexible and the particulates remained crisp for at least one year under normal transport, commercial packaging, and shelf life conditions of 10 ºC (50° F) to 29,44 ºC (85° F).

The invention is defined by the appended set of claims.

## Claims

1. A binder syrup comprising: polydextrose in an amount of at least 30% by weight, crystalline fructose in an amount of at least 1% by weight, and glycerin in an amount of at least 1% by weight, and wherein the total combined amount of glucose and sucrose in said binder is less than 1% by weight based on the total weight of the binder syrup, wherein the binder syrup has a water activity of less than 0.55.

2. The binder syrup of claim 1 wherein said polydextrose is present in an amount of 45% to 80% by weight based on the total weight of the binder syrup.

3. The binder syrup of claim 1 wherein said crystalline fructose is present in an amount of 1% to 25% by weight based on the total weight of the binder syrup.

4. The binder syrup of claim 1 wherein said glycerin is present in an amount of 1% to 15% by weight based on the total weight of the binder syrup.

5. The binder syrup of claim 1 wherein said polydextrose is present in an amount of 50% to 65% by weight, said crystalline fructose is present in an amount of 10% to 18% by weight, and said glycerin is present in an amount of 5% to 10% by weight, based on the total weight of the binder syrup.

6. The binder syrup of claim 1 including fiber in an amount of at least 27 % by weight based on the total weight of the binder syrup.

7. The binder syrup of claim 6 wherein said fiber is present in an amount of 40 % by weight to 50 % by weight based on the total weight of the binder syrup.

8. The binder syrup of claim 1 including dextrose, glucose, and sucrose in an amount less than 1.0% by weight, based on the total weight of the binder syrup.

9. A food product comprising:
a plurality of particulates,
a binding syrup disposed on said particulates, and
said binding syrup including polydextrose in an amount of at least 30% by
weight, crystalline fructose in an amount of at least 1% by weight, and glycerin in an amount of at least 1% by weight, and wherein the total amount of glucose and sucrose n said binder is less than 1% by weight based on the total weight of the binder syrup, wherein the binder syrup has a water activity of less than 0.55.

10. The food product of claim 9 wherein said binder syrup is present in an amount of 30% to 40% by weight based on the total weight of the food product.

11. The food product of claim 9 wherein said binder syrup includes said polydextrose in an amount of 50% to 65% by weight, said crystalline fructose in an amount of 10% to 18% by weight, and said glycerin in an amount of 5% to 10% by weight, based on the total weight of the binder syrup.

12. The food product of claim 9 wherein said particulates include at least one of cereal pieces, granola, rice bubbles, whole grains, bran particles, toasted oats, rolled oats, nuts, and fruit pieces.

13. The food product of claim 12 wherein said particulates include toasted oats in an amount of 34% to 36% by weight, raisins in an amount of 6% to 8% by weight, rolled oats in an amount of 7% to 9% by weight, almonds in an amount of 4% to 6% by weight, and rice bubbles in an amount of 6% to 8% by weight, based on the total weight of the food.

14. (Proposed Amendment) A method of forming a binder syrup comprising the steps of: combining polydextrose in an amount of at least 30% by weight, crystalline fructose in an amount of at least 1% by weight, and glycerin in an amount of at least 1% by weight, and wherein the total combined amount of glucose and sucrose in said binder is less than 1% by weight based on the total weight of the binder syrup.

15. The method of claim 14 including heating the binding syrup to a temperature of 62,78 ºC (145°F) to 71,11 ºC (160°F) until the binding syrup has a water activity level of less than 0.55.

16. The method of claim 14 wherein said combining includes blending the polydextrose, the glycerin, and water to form an aqueous polydextrose blend before combining the crystalline fructose with the aqueous polydextrose blend.

17. The method of claim 16 including heating the aqueous polydextrose blend at a temperature of 76,66 ºC (170°F) to 112,78 ºC (235°F) before combining the crystalline fructose with the aqueous polydextrose blend.

## Patentansprüche

1. Bindersirup umfassend: Polydextrose in einer Menge von mindestens 30 Gew.-%, kristalline Fruktose in einer Menge von mindestens 1 Gew.-% und Glyzerin in einer Menge von mindestens 1 Gew.-%, und wobei die kombinierte Gesamtmenge von Glukose und Saccharose in dem Binder weniger als 1 Gew.-% beträgt, basierend auf dem Gesamtgewicht des Bindersirups, wobei der Bindersirup eine Wasseraktivität von weniger als 0,55 aufweist.

2. Bindersirup nach Anspruch 1, worin die Polydextrose in einer Menge von 45 Gew.-% bis 80 Gew.-% vorhanden ist, basierend auf dem Gesamtgewicht des Bindersirups.

3. Bindersirup nach Anspruch 1, worin die kristalline Fruktose in einer Menge von 1 Gew.-% bis 25 Gew.-% vorhanden ist, basierend auf dem Gesamtgewicht des Bindersirups.

4. Bindersirup nach Anspruch 1, worin das Glyzerin in einer Menge von 1 Gew.-% bis 15 Gew.-% vorhanden ist, basierend auf der Gesamtmenge des Bindersirups.

5. Bindersirup nach Anspruch 1, worin die Polydextrose in einer Menge von 50 Gew.-% bis 65 Gew.-% vorhanden ist, die kristalline Fruktose in einer Menge von 10 Gew.-% bis 18 Gew.-% vorhanden ist, und das Glyzerin in einer Menge von 5 Gew.-% bis 10 Gew.-% vorhanden ist, basierend auf dem Gesamtgewicht des Bindersirups.

6. Bindersirup nach Anspruch 1, enthaltend Ballaststoffe in einer Menge von mindestens 27 Gew.-%, basierend auf dem Gesamtgewicht des Bindersirups.

7. Bindersirup nach Anspruch 6, worin die Ballaststoffe in einer Menge von 40 Gew.-% bis 50 Gew.-% vorhanden sind, basierend auf dem Gesamtgewicht des Bindersirups.

8. Bindersirup nach Anspruch 1, enthaltend Dextrose, Glukose und Saccharose in einer Menge von weniger als 1,0 Gew.-%, basierend auf dem Gesamtgewicht des Bindersirups.

9. Lebensmittelprodukt umfassend: eine Vielzahl von Partikeln, einen auf diesen Partikeln angeordneten Bindersirup, und dieser Bindersirup enthaltend Polydextrose in einer Menge von mindestens 30 Gew.-%, kristalline Fruktose in einer Menge von mindestens 1 Gew.-%, und wobei die Gesamtmenge von Glukose und Saccharose in dem Bindersirup weniger als 1 Gew.-% beträgt, basierend auf dem Gesamtgewicht des Bindersirups, wobei der Bindersirup eine Wasseraktivität von weniger als 0,55 aufweist.

10. Lebensmittelprodukt nach Anspruch 9, worin der Bindersirup in einer Menge von 30 Gew.-% bis 40 Gew.-% vorhanden ist, basierend auf dem Gesamtgewicht des Lebensmittelprodukts.

11. Lebensmittelprodukt nach Anspruch 9, worin der Bindersirup die Polydextrose in einer Menge von 50 Gew.-% bis 65 Gew.-%, die kristalline Fruktose in einer Menge von 10 Gew.-% bis 18 Gew.-%, und das Glyzerin in einer Menge von 5 Gew.-% bis 10 Gew.-% enthält, basierend auf dem Gesamtgewicht des Bindersirups.

12. Lebensmittelprodukt nach Anspruch 9, worin die Partikel mindestens eines von Getreidestückchen, Müsli, Reisblasen, Vollkorn, Kleiepartikeln, geröstetem Hafer, Haferflocken, Nüssen und Fruchtstückchen einschließen.

13. Lebensmittelprodukt nach Anspruch 12, worin die Partikel gerösteten Hafer in einer Menge von 34 Gew.-% bis 36 Gew.-%, Rosinen in einer Menge von 6 Gew.-% bis 8 Gew.-%, Haferflocken in einer Menge von 7 Gew.-% bis 9 Gew.-%, Mandeln in einer Menge von 4 Gew.-% bis 6 Gew.-% und Reisblasen in einer Menge von 6 Gew.-% bis 8 Gew.-% einschließen, basierend auf dem Gesamtgewicht des Lebensmittels.

14. (Vorgeschlagene Änderung) Verfahren zum Bilden eines Bindersirups umfassend die Schritte: Kombinieren von Polydextrose in einer Menge von mindestens 30 Gew.-%, kristalliner Fruktose in einer Menge von mindestens 1 Gew.-% und Glyzerin in einer Menge von mindestens 1 Gew.-%, und wobei die kombinierte Gesamtmenge von Glukose und Saccharose in dem Binder weniger als 1 Gew.-% beträgt, basierend auf der Gesamtmenge des Bindersirups.

15. Verfahren nach Anspruch 14, enthaltend Erhitzen des Bindersirups auf eine Temperatur von 62,78°C (145°F) bis 71,11°C (160°F), bis der Bindersirup ein Wasseraktivitätsniveau von weniger als 0,55 aufweist.

16. Verfahren nach Anspruch 14, wobei das Kombinieren das Mischen der Polydextrose, des Glyzerins und Wasser einschließt, um eine wässrige Polydextrosemischung zu bilden, bevor die kristalline Fruktose mit der wässrigen Polydextrosemischung kombiniert wird.

17. Verfahren nach Anspruch 16, enthaltend Erhitzen der wässrigen Polydextrosemischung auf eine Temperatur von 76,66°C (170°F) bis 112,78°C (235°F), bevor die kristalline Fruktose mit der wässrigen Polydextrosemischung kombiniert wird.

## Revendications

1. Un sirop liant comprenant : du polydextrose dans une quantité d'au moins 30% en poids, du fructose cristallisé dans une quantité d'au moins 1% en poids, et de la glycérine dans une quantité d'au moins 1% en poids, et dans lequel la quantité totale combinée de glucose et de saccharose dans ledit liant est inférieure à 1% en poids sur la base du poids total du sirop liant, dans lequel le sirop liant a une activité de l'eau inférieure à 0,55.

2. Le sirop liant de la revendication 1, dans lequel ledit polydextrose est présent dans une quantité allant de 45% à 80% en poids sur la base du poids total du sirop liant.

3. Le sirop liant de la revendication 1, dans lequel ledit fructose cristallisé est présent dans une quantité allant de 1% à 25% en poids sur la base du poids total du sirop liant.

4. Le sirop liant de la revendication 1, dans lequel ladite glycérine est présente dans une quantité allant de 1% à 15% en poids sur la base du poids total du sirop liant.

5. Le sirop liant de la revendication 1, dans lequel ledit polydextrose est présent dans une quantité allant de 50% à 65% en poids, ledit fructose cristallisé est présent dans une quantité allant de 10% à 18% en poids, et ladite glycérine est présente dans une quantité allant de 5% à 10% en poids, sur la base du poids total du sirop liant.

6. Le sirop liant de la revendication 1 comprenant de la fibre dans une quantité d'au moins 27% en poids sur la base du poids total du sirop liant.

7. Le sirop liant de la revendication 6, dans lequel ladite fibre est présente dans une quantité allant de 40% en poids à 50% en poids sur la base du poids total du sirop liant.

8. Le sirop liant de la revendication 1 comprenant du dextrose, du glucose, et du saccharose dans une quantité inférieure à 1,0% en poids, sur la base du poids total du sirop liant.

9. Un produit alimentaire comprenant : une pluralité de particules, un sirop liant disposé sur lesdites particules, et ledit sirop liant comprenant du polydextrose dans une quantité d'au moins 30% en poids, du fructose cristallisé dans une quantité d'au moins 1% en poids, et de la glycérine dans une quantité d'au moins 1% en poids, et dans lequel la quantité totale de glucose et de saccharose dans ledit liant est inférieure à 1% en poids sur la base du poids total du sirop liant, dans lequel le sirop liant a une activité de l'eau inférieure à 0,55.

10. Le produit alimentaire de la revendication 9, dans lequel ledit sirop liant est présent dans une quantité allant de 30% à 40% en poids, sur la base du poids total du produit alimentaire.

11. Le produit alimentaire de la revendication 9, dans lequel ledit sirop liant comprend ledit polydextrose dans une quantité allant de 50% à 65% en poids, ledit fructose cristallisé dans une quantité allant de 10% à 18% en poids, et ladite glycérine dans une quantité allant de 5% à 10% en poids, sur la base du poids total du sirop liant.

12. Le produit alimentaire de la revendication 9, dans lequel lesdites particules comprennent au moins un ingrédient parmi : morceaux de céréales, muesli, riz soufflé, céréales complètes, particules de son, avoine grillée, flocons d'avoine, fruits à coque, et morceaux de fruits.

13. Le produit alimentaire de la revendication 12, dans lequel lesdites particules comprennent de l'avoine grillée dans une quantité allant de 34% à 36% en poids, des raisins dans une quantité allant de 6% à 8% en poids, des flocons d'avoine dans une quantité allant de 7% à 9% en poids, des amandes dans une quantité allant de 4% à 6% en poids, et du riz soufflé dans une quantité allant de 6% à 8% en poids, sur la base du poids total de l'aliment.

14. (Modification proposée) Procédé de formation d'un sirop liant comprenant les étapes consistant à : combiner du polydextrose dans une quantité d'au moins 30% en poids, du fructose cristallisé dans une quantité d'au moins 1% en poids, et de la glycérine dans une quantité d'au moins 1% en poids, et dans lequel la quantité totale combinée de glucose et de saccharose dans ledit liant est inférieure à 1% en poids sur la base du poids total du sirop liant.

15. Le procédé de la revendication 14 comprenant le chauffage du sirop liant à une température allant de 62,78°C (145°F) à 71,11°C (160°F) jusqu'à ce que le sirop liant ait un niveau d'activité de l'eau inférieur à 0,55.

16. Le procédé de la revendication 14, dans lequel ladite combinaison comprend le mélange du polydextrose, de la glycérine, et d'eau pour former un mélange de polydextrose aqueux avant de combiner le fructose cristallisé au mélange de polydextrose aqueux.

17. Le procédé de la revendication 16 comprenant le chauffage du mélange de polydextrose aqueux à une température allant de 76,66°C (170°F) à 112,78°C (235°F) avant de combiner le fructose cristallisé au mélange de polydextrose aqueux.
